(19)

Europäisches
Patentamt
European
Patent Office
Office européen
des brevets

(11)  EP 3 287 919 A1

(12)  EUROPEAN PATENT APPLICATION

(43) Date of publication:
28.02.2018  Bulletin 2018/09

(51) Int Cl.:
G06F 21/10 (2013.01)          G06F 21/62 (2013.01)
H04L 29/06 (2006.01)

(21) Application number: 16185166.2

(22) Date of filing: 22.08.2016

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(71) Applicant: Keyp GmbH
80799 München (DE)

(72) Inventors:
• Edmaier, Markus
84556 Kastl (DE)

• Feldmann, Stephanie
80634 München (DE)
• Mang, Simon
80636 München (DE)
• Möhring, Maximilian
80333 München (DE)

(74) Representative: Patentship
Patentanwaltsgesellschaft mbH
Elsenheimerstraße 65
80687 München (DE)

(54)  DATA GUARD SYSTEM

(57)  The invention relates to a data guard system (102) for detecting unauthorized access to a data token of a plurality of data tokens by a requesting communication entity (104). The data guard system (102) comprises a guard interface (102a) being configured to receive from the requesting communication entity (104) an access request requesting an access to the data token, the access request comprising first information data representing a first information content, a data guard (102b) with an access rule for ruling the access to the data token, the data guard (102b) being configured to extract an attribute relating to the information content from the information data and to apply the access rule to the extracted attribute to obtain a current verification result, and a decider (102d) being configured to determine whether the current verification result matches with a pre-stored verification result, the pre-stored verification result resulting from applying the access rule to a previously extracted attribute from a previously received access request from the requesting communication entity (104), the previously received access request comprising second information data representing a second information content, the decider (102d) being configured to issue a warning message indicating the unauthorized access if the current verification result does not match with the pre-stored verification result.

Fig. 1

EP 3 287 919 A1

## Description

TECHNICAL FIELD

In general, the present invention relates to the field of communication systems. In particular, the present invention relates to systems, devices and methods for detecting unauthorized access to data in communication systems.

BACKGROUND

Data communication over a variety of networks, such as Internet protocol (IP) networks, smartphones or computers has extremely increased over recent years. The affordability and availability of smartphones, computers, or other network access devices has made their use prevalent in a variety of applications.

As access to Internet and other communication networks becomes easier and easier, these networks are increasingly used for applications involving the transfer of data such as images, audio, video and text. For example, data for computer software, music, video, and other applications can be requested and delivered via Internet. The number of network subscribers, data providers, and requests by those subscribers for data transfer and other content is growing very fast. However, the limitations of current systems can restrict the ability to meet the demand in a reliable, secure, efficient and affordable manner. In particular, a challenge to network data transfer involves the management of media rights associated with digital rights management. For example, in order to inhibit and/or prevent fraudulent behavior, such as copying, distribution or other unauthorized use of data, security precautions have to be taken.

Thus, there is a need for improved systems, devices and methods for detecting unauthorized to data in communication systems.

SUMMARY

It is an object of the invention to provide for improved systems, devices and methods for detecting unauthorized access to data in communication systems.

The foregoing and other objects are achieved by the subject matter of the independent claims. Further implementation forms are apparent from the dependent claims, the description and the figures.

According to a first aspect the invention relates to a data guard system for detecting unauthorized access to a data token of a plurality of data tokens by a requesting communication entity, the data guard system comprising: a guard interface being configured to receive from the requesting communication entity an access request requesting an access to the data token, the access request comprising first information data representing a first information content, a data guard with an access rule for ruling the access to the data token, the data guard being configured to extract an attribute relating to the information content from the information data and to apply the access rule to the extracted attribute to obtain a current verification result, and a decider being configured to determine whether the current verification result matches with a pre-stored verification result, the pre-stored verification result resulting from applying the access rule to a previously extracted attribute from a previously received access request from the requesting communication entity, the previously received access request comprising second information data representing a second information content, the decider being configured to issue a warning message indicating the unauthorized access if the current verification result does not match with the pre-stored verification result.

An advantage of the invention is that storing the verification result allows the data guard system to perform authentication and matching of the requesting communication entity in one step, because, in such a way, the data guard system can save metadata of every "authentication chain" and data token with a time stamp depending on the requesting communication entity. While performing the operations allowing to obtain the current verification result, the data guard system can perform a matching with historic guard metadata ("reaction chain") concerning the requesting communication entity in order to, for example, detect potential fraud or to recommend information or data token to the requesting communication entity. While the aim of the authentication is to prevent a fraudulent behavior of the requesting communication entity, the aim of matching is to provide the requesting communication entity with suggestions of content that could match its interests.

In an implementation form the guard interface is configured to receive from the requesting communication entity the previous access request requesting an access to the data token, wherein the data guard is configured to extract an attribute from the second information data to obtain the previously extracted attribute and to apply the access rule to the previously extracted attribute to obtain the previous verification result.

In an implementation form the information content is represented by a data stream, and the data guard is configured to extract the respective attribute from the information content.

In an implementation form the data guard is configured to identify the information content in order to extract the respective attribute.

In an implementation form the data guard is configured to extract a frequency spectrum of the information content to obtain the respective attribute.

In an implementation form the information content is a graphical information, in particular a picture or a video, or an audio information, in particular a sound file, or a text information.

In an implementation form the decider is configured to compare or to correlate the current verification result to the previous verification result to determine whether the current verification result matches with the previous verification result.

In an implementation form the decider is configured to determine that the current verification result does not match with the pre-stored verification result if the current verification result differs from the previous verification result, or to determine that the current verification result matches with the pre-stored verification result if the pre-stored verification result equals the current verification result.

In an implementation form the decider is configured to compare a plurality of previous verification results with the current verification result and to determine that the current verification result does not match with the pre-stored verification result if the pre-stored verification result differs from the majority of the previous verification results, or to determine that the current verification result matches with the pre-stored verification result if the pre-stored verification result equals the majority of the previous verification results.

In an implementation form the previous verification result comprises a plurality or result entries, in particular binary result entries, forming a previous result vector, wherein the current verification result comprises a plurality or result entries, in particular binary result entries, forming a current result vector, and wherein the decider is configured to compare the result entries of the previous result vector with the result entries of the current result vector or to correlate the previous result vector with the current result vector or to subtract the previous result vector from the current result vector to determine whether the current verification result does not match with the pre-stored verification result.

In an implementation form the data token is formed by digital data or the data token is formed by digital access data for accessing to digital data, in particular to a digital data space forming a digital group.

In an implementation form the data guard system is formed by a computer executable code, the computer executable code being signed with a digital signature, in particular with a Hash value generated upon the bases of the computer executable code.

According to a second aspect the invention relates to a data guard method for detecting unauthorized access to a data token of a plurality of data tokens by a requesting communication entity. The data guard method comprises the following steps: receiving from the requesting communication entity an access request requesting an access to the data token, the access request comprising first information data representing a first information content, extracting an attribute relating to the information content from the information data, applying an access rule to the extracted attribute to obtain a current verification result, the access rule ruling the access to the data token, and determining whether the current verification result matches with a pre-stored verification result, the pre-stored verification result resulting from applying the access rule to a previously extracted attribute from a previously received access request from the requesting communication entity, the previously received access request comprising second information data representing a second information content, the decider being configured to issue a warning message indicating the unauthorized access if the current verification result does not match with the pre-stored verification result.

According to a third aspect the invention relates to a communication device comprising the data guard system according to the first or second aspect and any one of the implementation forms thereof and a communication interface, the communication interface being configured to receive the access request over a communication network, and to pass the received access request to the guard interface.

In an implementation form the communication interface is a wireless interface, in particular a LTE interface or a UMTS interface or a WiFi interface or a NFC interface or an infrared interface.

In an implementation form the data guard system is a software code which can be downloaded from a server according to rules defined by an owner of the software code.

In an implementation form the software code is a Java or an objective-C code.

The invention can be implemented in hardware and/or software.

BRIEF DESCRIPTION OF THE DRAWINGS

Further embodiments of the invention will be described with respect to the following figures, wherein:

Fig. 1 shows a schematic diagram illustrating a communication system comprising a data guard system and a requesting communication entity communicating over a communication channel according to an embodiment;

Fig. 2 shows a schematic diagram illustrating a communication flow between a data guard system and a user of a requesting communication entity according to an embodiment;

Fig. 3a shows exemplary entries of a table containing information related to a data guard system according to an embodiment;

Fig. 3b shows exemplary entries of a table containing information related to a data guard system according to an embodiment;

Fig. 4 shows two exemplary tables containing information related to a data guard system according to an embodiment;

Fig. 5 shows a schematic diagram of a data guard method for detecting unauthorized access to a data token of a plurality of data by a requesting communication entity according to an embodiment; and

Fig. 6 shows a schematic diagram of a communication system comprising a communication device and a requesting communication entity communicating over a communication channel according to an embodiment.

In the figures, identical reference signs will be used for identical or functionally equivalent features.

DETAILED DESCRIPTION OF EMBODIMENTS

In the following description, reference is made to the accompanying drawings, which form part of the disclosure, and in which are shown, by way of illustration, specific aspects in which the present invention may be placed. It will be appreciated that the invention may be placed in other aspects and that structural or logical changes may be made without departing from the scope of the invention. The following detailed description, therefore, is not to be taken in a limiting sense, as the scope of the invention is defined by the appended claims.

For instance, it will be appreciated that a disclosure in connection with a described method will generally also hold true for a corresponding device or system configured to perform the method and vice versa. For example, if a specific method step is described, a corresponding device may include a unit to perform the described method step, even if such unit is not explicitly described or illustrated in the figures.

Moreover, in the following detailed description as well as in the claims, embodiments with functional blocks or processing units are described, which are connected with each other or exchange signals. It will be appreciated that the invention also covers embodiments which include additional functional blocks or processing units that are arranged between the functional blocks or processing units of the embodiments described below.

Finally, it is understood that the features of the various exemplary aspects described herein may be combined with each other, unless specifically noted otherwise.

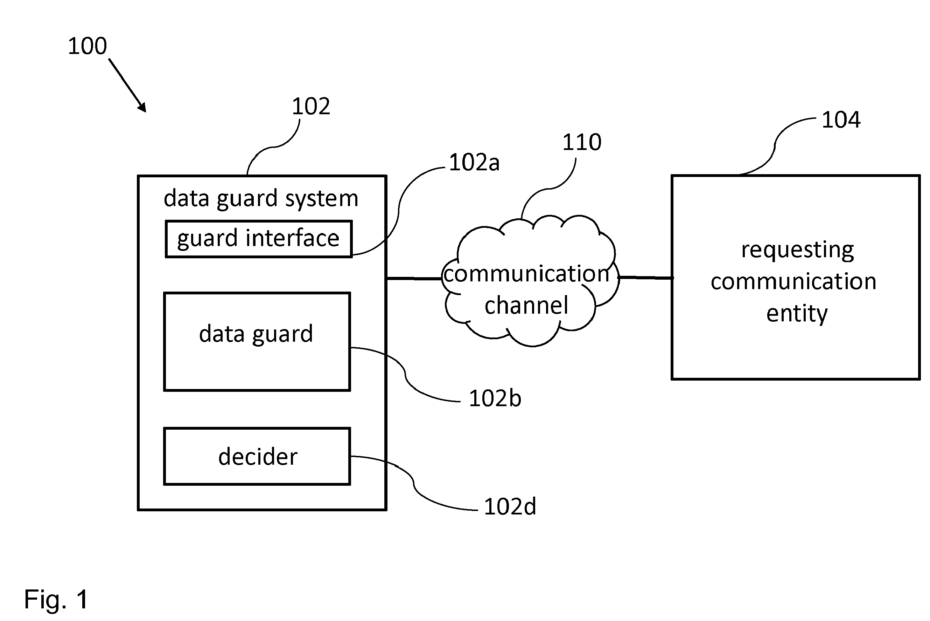

Figure 1 shows a schematic diagram illustrating a communication system 100 comprising a data guard system 102 and a requesting communication entity 104 communicating over a communication channel 110 according to an embodiment.

In an embodiment the data guard system 102 can be used for detecting unauthorized access to a data token of a plurality of data tokens by the requesting communication entity 104. The data guard system 102 can comprise a guard interface 102a being configured to receive from the requesting communication entity 104 an access request requesting an access to the data token, the access request comprising first information data representing a first information content. Furthermore, the data guard system 102 can comprise a data guard 102b with an access rule for ruling the access to the data token, wherein the data guard 102b can be configured to extract an attribute relating to the information content from the information data and to apply the access rule to the extracted attribute to obtain a current verification result. Moreover, the data guard system 102 can comprise a decider 102d, which can be configured to determine whether the current verification result matches with a pre-stored verification result, the pre-stored verification result resulting from applying the access rule to a previously extracted attribute from a previously received access request from the requesting communication entity 104, the previously received access request comprising second information data representing a second information content. The decider 102d can also be configured to issue a warning message indicating the unauthorized access if the current verification result does not match with the pre-stored verification result.

In an embodiment the respective information content can be a meta content, in particular a geographical location of the requesting communication entity 104 or personal information relating to a user 104a of the requesting entity 104, and the respective data guard 102b can be configured to extract the respective meta content to obtain the respective attribute.

In another embodiment the decider 102d can be configured to output an enable signal if the current verification result matches with the pre-stored verification result.

Moreover, in a further embodiment, the decider 102d can be configured to establish a communication channel between the requesting communication entity 104 and the data token if the decider 102d outputs the enable signal, or to reject the access request if the decider 102d outputs the warning signal.

In an embodiment the guard interface 102a can be a HTML interface or a HTTP interface or a GUI interface or a API interface.

The communication channel 110 can be a wired or a wireless communication channel.

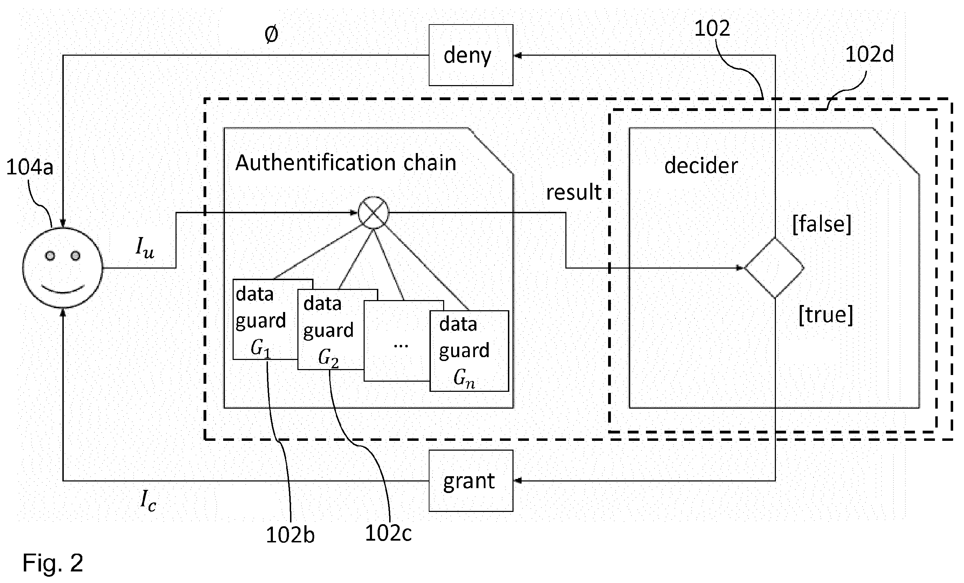

Figure 2 shows a schematic diagram illustrating a communication flow between a data guard system 102 and a user 104a of a requesting communication entity 104 according to an embodiment.

In this embodiment the user 104a of the requesting communication entity 104 request access to a data token (e.g., picture, text or video) $I_c$, wherein the data token is guarded by the data guard system 102, and provides information data $I_u$ to the data guard system 102. Firstly, the data guards (e.g. 102b and 102c) extract attributes from the provided information data $I_u$ (e.g. objects in a picture) of the requesting communication entity 104. Afterwards, each of the data guards (e.g., 102b and 102c) applies a set of defined rules $G_1(I_U), G_2(I_U), ..., G_n(I_U)$ on those attributes and a combined "authentication chain" or current verification result r is obtained:

$$r = G_1(I_U) \wedge G_2(I_U) \wedge \ldots \wedge G_n(I_U),$$

wherein the symbol $\wedge$ denotes a logical AND operator. Then, the current verification result r is passed to the decider 102d. Based on the current verification result r, the decider 102d can determine whether the current verification result r matches with a pre-stored verification result. If the current verification result r matches with the pre-stored verification result, then the decider 102d grants access to the requested data token $I_c$ to the requesting communication entity 104, otherwise it denies access to the requested data token $I_c$.

Storing the verification result r has the advantage of allowing the data guard system 102 to perform authentication and matching of the requesting communication entity 104 in one step, because, in such a way, the data guard system 102 saves metadata of every "authentication chain" and data token with a time stamp depending on the requesting communication entity 104. While performing the operations allowing to obtain the current verification result r, the data guard system 102 can perform a matching with historic guard metadata ("reaction chain") concerning the requesting communication entity 104 in order to, for example, detect potential fraud or to recommend information or data token to the requesting communication entity 104. While the aim of the authentication is to prevent a fraudulent behavior of the requesting communication entity 104, the aim of matching is to provide the requesting communication entity 104 with suggestions of content that could match its interests.

Advantageously, by means of the aforementioned "reaction chain", the data guard system 102 can save the following metadata related to the requesting communication entity 104: data token type and headline, access rule type or guard type, task and result, time stamp, amount of access rules or guards per data token, the last showing the relationship between the requesting communication entity 104 and a particular data token.

Furthermore, another advantage of the data guard system 102 is that it allows to encrypt personal data related to requesting communication entity 104, while still being able to perform authentication and matching, even if the profile of the user 104a of the requesting communication entity 104 as well as the information itself (data token) can be encrypted.

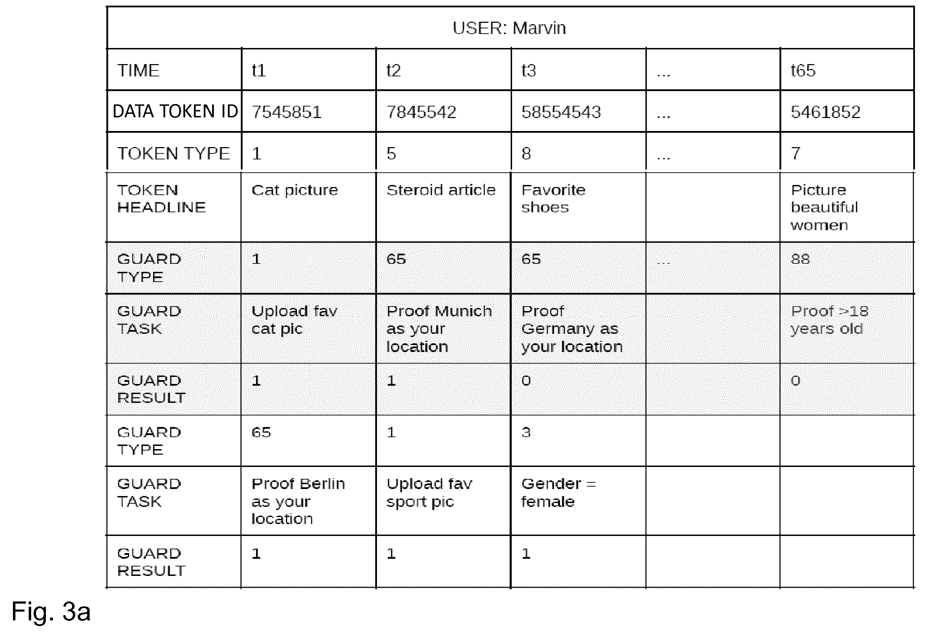

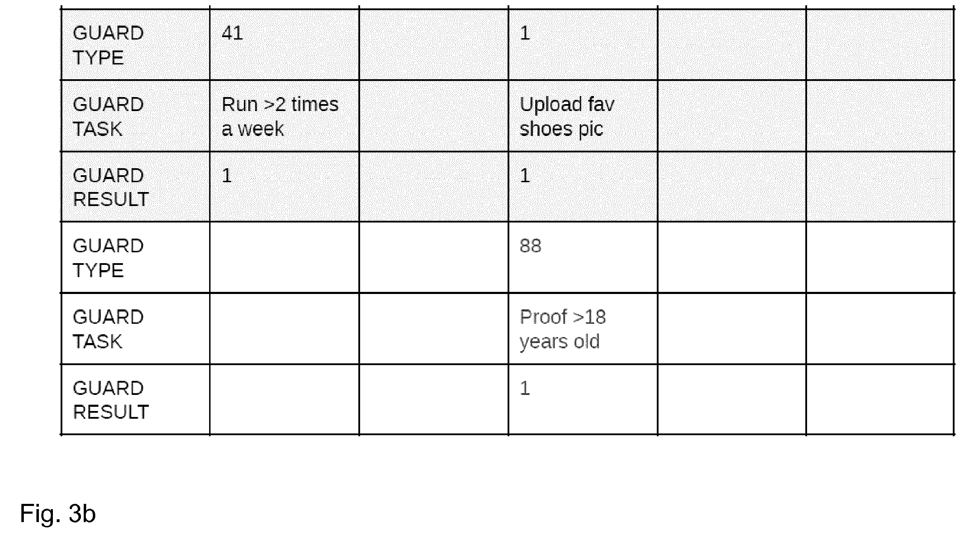

Figure 3a and 3b show exemplary entries of a table containing information related to a data guard system 102 according to an embodiment. In particular, the table shows an example of a fraudulent behavior of the user 104a of the requesting communication entity 104. In fact, in this embodiment, the user 104a has a "reaction chain" with 65 entries and wants to solve the access rule or guard 88 (age guard) in order to access the data token 7 (picture token). The data guard system 102 identifies the potential fraudulent behavior, since in the reaction chain of the user 104a there is a logical error concerning the age guard. As it is shown in the table in figure 3b, at time t3 the user 104a proved to be older than 18 years and this means that it cannot be under 18 years at time t65 (which is after t3) as shown in figure 3a.

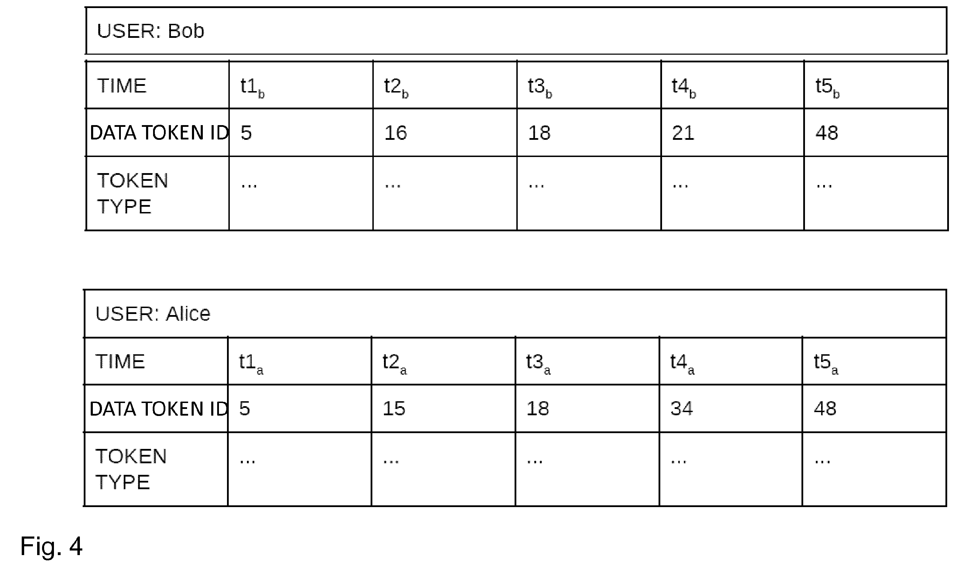

Figure 4 shows two exemplary tables containing information related to a data guard system 102 according to an embodiment. In particular, an example of a reaction chain, that is of a chain of reactions of a user 104a of the requesting communication entity 104 to a particular data token is illustrated, showing what data tokens the user 104a is interested in. The reaction chain can be seen as a result vector which may be compared to the reaction chains of other users, wherein similar result vectors of different users will form smaller angles. The differences between the most similar or most matching result vectors can be used from the data guard system 102 to make suggestions to other users. For example, the user Alice in figure 4 reacted to the data tokens 5, 15, 18, 34 and 48, while the user Bob in figure 4 reacted to data tokens 5, 16, 18, 21 and 48. Since the difference between these result vectors is small, they can be considered similar. In an embodiment of the data guard system 102, Bob can receive suggestions from the data guard system 102 containing data tokens 15 and 34, while Alice can receive data tokens 16 and 31.

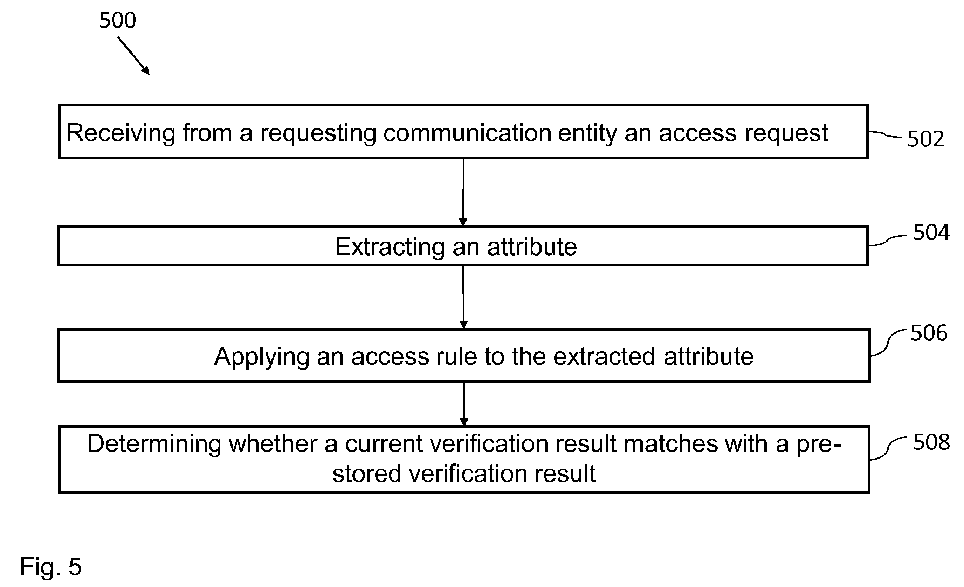

Figure 5 shows a schematic diagram of a data guard method 500 for detecting unauthorized access to a data token of a plurality of data by a requesting communication entity 104 according to an embodiment. The data guard method 500 comprises the steps of:

Receiving 502 from the requesting communication entity 104 an access request requesting an access to the data token, the access request comprising first information data representing a first information content;

Extracting 504 an attribute relating to the information content from the information data;

Applying 506 an access rule to the extracted attribute to obtain a current verification result, the access rule ruling the access to the data token; and

Determining 508 whether the current verification result matches with a pre-stored verification result, the pre-stored verification result resulting from applying the access rule to a previously extracted attribute from a previously received access request from the requesting communication entity 104, the previously received access request comprising second information data representing a second information content, the decider 102d being configured to issue a warning message indicating the unauthorized access if the current verification result does not match with the pre-stored verification result.

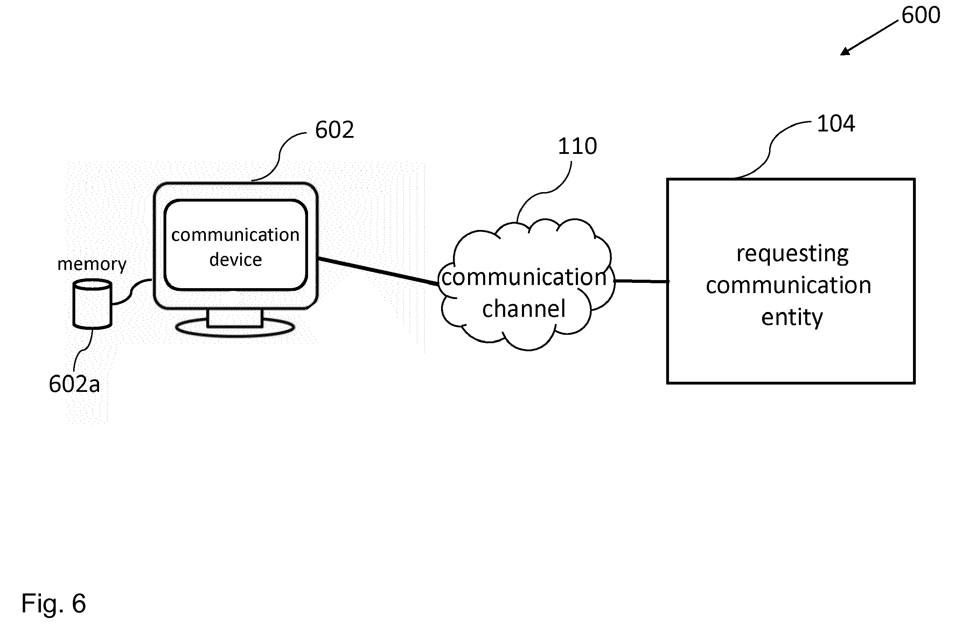

Figure 6 shows a schematic diagram of a communication system 600 comprising a communication device 602 and a requesting communication entity 104 communicating over a communication channel 110 according to an embodiment. The communication device 602 can comprise the data guard system 102 and a communication interface, the communication interface being configured to receive the access request over the communication channel 110, and to pass the received access request to the guard interface 102a of the data guard system 102.

In an embodiment the data guard system 102 is formed by an executable software code, and the communication device 602 comprises a processor being configured to execute the executable software code. In an embodiment the computer executable code can be signed with a digital signature. Signing the executable code with a digital signature has the advantage of allowing the processor of the communication device 602 to identify the signature and to verify that the executable code has not been modified since it was signed. In such a way, the executable code can be protected by the digital signature, because the digital signature becomes invalid if any part of the executable code is changed. Signing the executable code can also be used in combination with an identity of the data guard system 102, provisioning profile, or entitlements in order to ensure at least the following aspects:

the data guard system 102 can be built and signed by trusted entities;

the data guard system 102 can run on designated development devices; and

the data guard system 102 can be configured to avoid services that the entrusted entity did not add to the data guard system 102.

Furthermore, signing the executable code with a digital signature can also allow the entrusted entity to remove or redesign the data guard system 102.
In an embodiment the communication device 602 can comprise a memory 602a for access rule storage and the data guard system 102 can be configured to read out the respective access rule from the memory 602a.

In an embodiment the communication device 602 can be a smartphone or a personal computer.

In an embodiment the communication device 602 can be configured to execute the data guard method 500.

While a particular feature or aspect of the disclosure may have been disclosed with respect to only one of several implementations or embodiments, such feature or aspect may be combined with one or more other features or aspects of the other implementations or embodiments as may be desired and advantageous for any given or particular application. Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless whether they are in direct physical or electrical contact, or they are not in direct contact with each other.

Although specific aspects have been illustrated and described herein, it will be appreciated by those of ordinary skill in the art that a variety of alternate and/or equivalent implementations may be substituted for the specific aspects shown and described without departing from the scope of the present disclosure. This application is intended to cover any adaptations or variations of the specific aspects discussed herein.
Although the elements in the following claims are recited in a particular sequence with corresponding labeling, unless the claim recitations otherwise imply a particular sequence for implementing some or all of those elements, those elements are not necessarily intended to be limited to being implemented in that particular sequence.

Many alternatives, modifications, and variations will be apparent to those skilled in the art in light of the above teachings. Of course, those skilled in the art will readily recognize that there are numerous applications of the invention beyond those described herein. While the present invention has been described with reference to one or more particular embodiments, those skilled in the art will recognize that many changes may be made thereto without departing from the scope of the present invention. It is therefore to be understood that within the scope of the appended claims and their equivalents, the invention may be practiced otherwise than as specifically described herein.

## Claims

1. Data guard system (102) for detecting unauthorized access to a data token of a plurality of data tokens by a requesting communication entity (104), the data guard system (102) comprising:

a guard interface (102a) being configured to receive from the requesting communication entity (104) an access request requesting an access to the data token, the access request comprising first information data representing a first information content;
a data guard (102b) with an access rule for ruling the access to the data token, the data guard (102b) being configured to extract an attribute relating to the information content from the information data and to apply the access rule to the extracted attribute to obtain a current verification result; and

a decider (102d) being configured to determine whether the current verification result matches with a pre-stored verification result, the pre-stored verification result resulting from applying the access rule to a previously extracted attribute from a previously received access request from the requesting communication entity (104), the previously received access request comprising second information data representing a second information content, the decider (102d) being configured to issue a warning message indicating the unauthorized access if the current verification result does not match with the pre-stored verification result.

2. The data guard system (102) of claim 1, wherein the guard interface (102a) is configured to receive from the requesting communication entity (104) the previous access request requesting an access to the data token, wherein the data guard (102b) is configured to extract an attribute from the second information data to obtain the previously extracted attribute and to apply the access rule to the previously extracted attribute to obtain the previous verification result.

3. The data guard system (102) of claim 1 or 2, wherein the information content is represented by a data stream, and wherein the data guard (102b) is configured to extract the respective attribute from the information content.

4. The data guard system (102) of any of the preceding claims, wherein the data guard (102b) is configured to identify the information content in order to extract the respective attribute.

5. The data guard system (102) of any of the preceding claims, wherein the data guard (102b) is configured to extract a frequency spectrum of the information content to obtain the respective attribute.

6. The data guard system (102) of any of the preceding claims, wherein the information content is a graphical information, in particular a picture or a video, or an audio information, in particular a sound file, or a text information.

7. The data guard system (102) of any of the preceding claims, wherein the decider (102d) is configured to compare or to correlate the current verification result to the previous verification result to determine whether the current verification result matches with the previous verification result.

8. The data guard system (102) of claim 7, wherein the decider (102d) is configured to determine that the current verification result does not match with the pre-stored verification result if the current verification result differs from the previous verification result, or to determine that the current verification result matches with the pre-stored verification result if the pre-stored verification result equals the current verification result.

9. The data guard system (102) of any of the preceding claims, wherein the decider (102d) is configured to compare a plurality of previous verification results with the current verification result and to determine that the current verification result does not match with the pre-stored verification result if the pre-stored verification result differs from the majority of the previous verification results, or to determine that the current verification result matches with the pre-stored verification result if the pre-stored verification result equals the majority of the previous verification results.

10. The data guard system (102) of any of the preceding claims, wherein the previous verification result comprises a plurality or result entries, in particular binary result entries, forming a previous result vector, wherein the current verification result comprises a plurality or result entries, in particular binary result entries, forming a current result vector, and wherein the decider (102d) is configured to compare the result entries of the previous result vector with the result entries of the current result vector or to correlate the previous result vector with the current result vector or to subtract the previous result vector from the current result vector to determine whether the current verification result does not match with the pre-stored verification result.

11. The data guard system (102) of any of the preceding claims, wherein the data token is formed by digital data or wherein the data token is formed by digital access data for accessing to digital data, in particular to a digital data space forming a digital group.

12. The data guard system (102) of any of the preceding claims, being formed by a computer executable code, the computer executable code being signed with a digital signature, in particular with a Hash value generated upon the bases of the computer executable code.

13. Data guard method (500) for detecting unauthorized access to a data token of a plurality of data tokens by a requesting communication entity (104), the data guard method (500) comprising:

Receiving (502) from the requesting communication entity (104) an access request requesting an access to the data token, the access request comprising first information data representing a first information content;

Extracting (504) an attribute relating to the information content from the information data;

Applying (506) an access rule to the extracted attribute to obtain a current verification result, the access rule ruling the access to the data token; and

Determining (508) whether the current verification result matches with a pre-stored verification result, the pre-stored verification result resulting from applying the access rule to a previously extracted attribute from a previously received access request from the requesting communication entity (104), the previously received access request comprising second information data representing a second information content, the decider (102d) being configured to issue a warning message indicating the unauthorized access if the current verification result does not match with the pre-stored verification result.

14. Communication device (602), comprising:

the data guard system (102) of any of the preceding claims 1 to 13; and

a communication interface, the communication interface being configured to receive the access request over a communication network (110), and to pass the received access request to the guard interface (102a).

15. The communication device (602) of claim 14, wherein the communication interface is a wireless interface, in particular a LTE interface or a UMTS interface or a WiFi interface or a NFC interface or an infrared interface.

Fig. 1

Fig. 2

| USER: Marvin | | | | | |
|---|---|---|---|---|---|
| TIME | t1 | t2 | t3 | ... | t65 |
| DATA TOKEN ID | 7545851 | 7845542 | 58554543 | ... | 5461852 |
| TOKEN TYPE | 1 | 5 | 8 | ... | 7 |
| TOKEN HEADLINE | Cat picture | Steroid article | Favorite shoes | | Picture beautiful women |
| GUARD TYPE | 1 | 65 | 65 | ... | 88 |
| GUARD TASK | Upload fav cat pic | Proof Munich as your location | Proof Germany as your location | | Proof >18 years old |
| GUARD RESULT | 1 | 1 | 0 | | 0 |
| GUARD TYPE | 65 | 1 | 3 | | |
| GUARD TASK | Proof Berlin as your location | Upload fav sport pic | Gender = female | | |
| GUARD RESULT | 1 | 1 | 1 | | |

Fig. 3a

EP 3 287 919 A1

| GUARD TYPE | 41 | 1 |
|---|---|---|
| GUARD TASK | Run >2 times a week | Upload fav shoes pic |
| GUARD RESULT | 1 | 1 |
| GUARD TYPE | | 88 |
| GUARD TASK | | Proof >18 years old |
| GUARD RESULT | | 1 |

Fig. 3b

| USER: Bob | | | | | |
|---|---|---|---|---|---|
| TIME | $t1_b$ | $t2_b$ | $t3_b$ | $t4_b$ | $t5_b$ |
| DATA TOKEN ID | 5 | 16 | 18 | 21 | 48 |
| TOKEN TYPE | ... | ... | ... | ... | ... |

| USER: Alice | | | | | |
|---|---|---|---|---|---|
| TIME | $t1_a$ | $t2_a$ | $t3_a$ | $t4_a$ | $t5_a$ |
| DATA TOKEN ID | 5 | 15 | 18 | 34 | 48 |
| TOKEN TYPE | ... | ... | ... | ... | ... |

Fig. 4

EP 3 287 919 A1

500

Receiving from a requesting communication entity an access request ⎯ 502

Extracting an attribute ⎯ 504

Applying an access rule to the extracted attribute ⎯ 506

Determining whether a current verification result matches with a pre-stored verification result ⎯ 508

Fig. 5

Fig. 6

Europäisches
Patentamt

European
Patent Office

Office européen
des brevets

# EUROPEAN SEARCH REPORT

Application Number

EP 16 18 5166

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2007/047846 A2 (INTERTRUST TECH CORP [US]; BOCCON-GIBOD GILLES [US]; BOEUF JULIEN G [F] 26 April 2007 (2007-04-26) * paragraphs [0005] - [0006], [0010] - [0011], [0063], [0066] - [0067], [0069], [0076] - [0077], [0088], [0091], [0094], [0097] - [0099], [0101], [0108] - [0109], [0171], [0223] - [0224], [0226] - [0228], [0236], [0446], [0451], [0626], [0665], [0741] - [0742], [0752], [0780] - [0782], [0788]; figures 5,8,9,38 * | 1-15 | INV. G06F21/10 G06F21/62 H04L29/06 |
| A | US 2014/143890 A1 (BUCHER TIMOTHY [US] ET AL) 22 May 2014 (2014-05-22) * paragraphs [0003], [0025], [0028] - [0035], [0037] - [0038], [0041] - [0043], [0045] - [0046], [0048], [0050] - [0052], [0055] - [0056] * | 1-15 | |
| A | EP 1 653 655 A1 (RESEARCH IN MOTION LTD [CA]) 3 May 2006 (2006-05-03) * paragraphs [0006], [0039] - [0040], [0044], [0050], [0090], [0094], [0100] - [0102] * | 1-15 | TECHNICAL FIELDS SEARCHED (IPC) G06F H04L |
| A | US 6 345 361 B1 (JERGER MICHAEL S [US] ET AL) 5 February 2002 (2002-02-05) * column 6, lines 13 - 45; column 6, line 66 - column 7, line 20; column 36, lines 43 - 47; column 37, line 57 - column 38, line 44; column 38, line 66 - column 39, line 23; figures 14,20 * | 1-15 | |

The present search report has been drawn up for all claims

| Place of search | Date of completion of the search | Examiner |
|---|---|---|
| Munich | 28 October 2016 | Betz, Sebastian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 18 5166

This annex lists the patent family members relating to the patent documents cited in the above-mentioned European search report.
The members are as contained in the European Patent Office EDP file on
The European Patent Office is in no way liable for these particulars which are merely given for the purpose of information.

28-10-2016

| Patent document cited in search report | Publication date | Patent family member(s) | Publication date |
|---|---|---|---|
| WO 2007047846 A2 | 26-04-2007 | AU 2006304655 A1 | 26-04-2007 |
| | | BR PI0617490 A2 | 23-03-2010 |
| | | CA 2626244 A1 | 26-04-2007 |
| | | CN 102073819 A | 25-05-2011 |
| | | CN 102882677 A | 16-01-2013 |
| | | EA 200801117 A1 | 27-02-2009 |
| | | EA 200901153 A1 | 30-04-2010 |
| | | EP 1943603 A2 | 16-07-2008 |
| | | EP 2090998 A1 | 19-08-2009 |
| | | EP 2124164 A2 | 25-11-2009 |
| | | EP 2128780 A2 | 02-12-2009 |
| | | IL 190957 A | 24-03-2013 |
| | | JP 5357292 B2 | 04-12-2013 |
| | | JP 2009512096 A | 19-03-2009 |
| | | JP 2012155734 A | 16-08-2012 |
| | | KR 20080064164 A | 08-07-2008 |
| | | KR 20120004557 A | 12-01-2012 |
| | | KR 20120092155 A | 20-08-2012 |
| | | US 2007100701 A1 | 03-05-2007 |
| | | US 2007100768 A1 | 03-05-2007 |
| | | US 2007172041 A1 | 26-07-2007 |
| | | US 2007180519 A1 | 02-08-2007 |
| | | US 2007185815 A1 | 09-08-2007 |
| | | WO 2007047846 A2 | 26-04-2007 |
| US 2014143890 A1 | 22-05-2014 | CN 101467177 A | 24-06-2009 |
| | | EP 2022006 A2 | 11-02-2009 |
| | | US 2007294180 A1 | 20-12-2007 |
| | | US 2014143890 A1 | 22-05-2014 |
| | | WO 2007140415 A2 | 06-12-2007 |
| EP 1653655 A1 | 03-05-2006 | AT 347206 T | 15-12-2006 |
| | | AU 2005225093 A1 | 18-05-2006 |
| | | BR PI0505083 A | 04-07-2006 |
| | | CA 2526863 A1 | 29-04-2006 |
| | | CN 1767438 A | 03-05-2006 |
| | | DE 602004003503 T2 | 03-05-2007 |
| | | EP 1653655 A1 | 03-05-2006 |
| | | HK 1089589 A1 | 02-02-2007 |
| | | JP 4491402 B2 | 30-06-2010 |
| | | JP 2006129490 A | 18-05-2006 |
| | | KR 20060052279 A | 19-05-2006 |
| | | SG 122015 A1 | 26-05-2006 |
| | | TW I324871 B | 11-05-2010 |
| US 6345361 B1 | 05-02-2002 | NONE | |

EPO FORM P0459

For more details about this annex : see Official Journal of the European Patent Office, No. 12/82

## ANNEX TO THE EUROPEAN SEARCH REPORT
## ON EUROPEAN PATENT APPLICATION NO.

EP 16 18 5166

This annex lists the patent family members relating to the patent documents cited in the above-mentioned European search report.
The members are as contained in the European Patent Office EDP file on
The European Patent Office is in no way liable for these particulars which are merely given for the purpose of information.

28-10-2016

| Patent document cited in search report | Publication date | Patent family member(s) | Publication date |
|---|---|---|---|
| --------------------------------------------------------------------------------------------------------- | | | |

EPO FORM P0459

For more details about this annex : see Official Journal of the European Patent Office, No. 12/82